# EUROPÄISCHE PATENTSCHRIFT

(11) **EP 1 465 274 B1**
(45) Veröffentlichungstag und Bekanntmachung des Hinweises auf die Patenterteilung: **04.08.2010**
(21) Anmeldenummer: 04008075.6
(22) Anmeldetag: 02.04.2004
(51) Int. Cl.: H01M 8/04, H01M 8/06

(54) **Brennstoffzellensystem und Brenneranordnung für ein Brennstoffzellensystem**
Fuel cell system and a burner arrangement for a fuel cell system
Système de piles à combustible et un arrangement de brûleur pour un système de piles à combustible

(30) Priorität: 03.04.2003 DE 10315255
(43) Veröffentlichungstag der Anmeldung: 06.10.2004
(73) Patentinhaber: J. Eberspächer GmbH & Co. KG, 73730 Esslingen (DE)
(72) Erfinder: Kaupert, Andreas, 89073 Ulm (DE); Eberspach, Günter, 72649 Wolfschlugen (DE)
(74) Vertreter: Ruttensperger, Bernhard

(56) Entgegenhaltungen:
- EP-A2- 0 924 786
- WO-A-00/74164
- WO-A2-02/01657
- DE-A1- 19 822 689
- JP-A- 2003 068 346

## Beschreibung

Die vorliegende Erfindung betrifft ein Brennstoffzellensystem sowie eine Brenneranordnung für ein derartiges Brennstoffzellensystem.

Brennstoffzellensysteme werden beispielsweise in Kraftfahrzeugen eingesetzt, um elektrische Energie bereitzustellen. Diese elektrische Energie kann beispielsweise zum Betreiben eines Antriebsaggregats genutzt werden, kann aber auch dazu genutzt werden, verschiedene andere Systembereiche eines Kraftfahrzeugs, die elektrisch betreibbar sind, mit Energie zu versorgen. Ein Problem bei derartigen Brennstoffzellensystemen ist, dass diese, bevor sie in Betrieb genommen werden können, auf geeignete Betriebstemperaturen gebracht werden müssen, die deutlich über den im Allgemeinen vorherrschenden Umgebungstemperaturen liegen.

Die WO 00/74164 A1 offenbart ein Brennstoffzellensystem zum Erzeugen von elektrischer Energie und Wärme, das als Brennstoff Erdgas verwendet. In einem Gaserzeugungssystem wird ein wasserstoffhaltiges Gasgemisch erzeugt, das einer Brennstoffzelle zugeführt wird, wobei die Abgase der Brennstoffzelle in einem katalytischen Brenner und einem davon stromabwärts gelegenen Nachbrenner, dem auch Erdgas zugeführt werden kann, weiter verbrannt werden. Stromabwärts des katalytischen Brenners und stromabwärts des Nachbrenners sind jeweils Wärmetauscher angeordnet. Diese Wärmetauscher übertragen Wärme auf ein Wärmeträgermedium, das zum Heizen des Gaserzeugungssystems und der Brennstoffzelle verwendet wird.

Die EP 0 924 786 A2 offenbart eine Brenneranordnung für ein Brennstoffzellensystem, das mit Methanol betrieben wird. Die Brenneranordnung umfasst mehrere poröse Medien, in denen die Abgase der Brennstoffzelle zusammen mit Methanol katalytisch verbrannt werden können.

Die JP 2003 068346 A offenbart ein Brennstoffzellensystem, bei welchem ein in einem Gaserzeugungssystem erzeugtes Wasserstoff enthaltendes Gasgemisch über ein Ventil einer Brennstoffzelle und einem katalytischen Brenner zugeführt werden kann.

Die WO 02/01657 A2 offenbart ein erdgasbetriebenes Brennstoffzellensystem, bei dem in einem Reformer ein wasserstoffhaltiges Gasgemisch erzeugt wird. Das Gasgemisch wird einer Brennstoffzelleneinheit zugeführt und die Abgase der Brennstoffzelleneinheit werden in einem katalytischen Brenner zur Erzeugung von Wärme verbrannt.

Es ist das Ziel der vorliegenden Erfindung, ein Brennstoffzellensystem und eine Brenneranordnung für ein Brennstoffzellensystem bereitzustellen, durch welche die verschiedenen zur Inbetriebnahme erforderlichen Systembereiche bei baulich einfacher Konfiguration zuverlässig erwärmt werden können.

Erfindungsgemäß wird diese Aufgabe gelöst durch ein Brennstoffzellensystem gemäß Anspruch 1. Das Brennstoffzellensystem umfasst ein Gaserzeugungssystem zur Erzeugung eines wasserstoffhaltigen Gasgemisches, eine Brennstoffzelle, welcher das wasserstoffhaltige Gasgemisch zuführbar ist zur Nutzung von darin enthaltenem Wasserstoff zur Erzeugung von Elektrizität, wobei ein wasserstoffentreichertes Gasgemisch die Brennstoffzelle verlässt, einen katalytischen Brenner, welchem das wasserstoffentreicherte Gasgemisch zur Wärmeerzeugung zuführbar ist, eine Wärmetauscheranordnung zur Übertragung von im katalytischen Brenner erzeugter Wärme auf ein Wärmeträgermedium, einen auf den katalytischen Brenner folgenden brennstoffbetriebenen Brenner zur Verbrennung von Brennstoff unter Flammbildung, sowie eine Wärmetauscheranordnung zur Übertragung von in dem brennstoffbetriebenen Brenner erzeugter Wärme auf ein Wärmeträgermedium.

in dem anderen

Die Verbrennungsprodukte des brennstoffbetriebenen Brenners oder/und des katalytischen Brenners sind dem Gaserzeugungssystem als Reaktionsstoff zur Erzeugung des wasserstoffhaltigen Gasgemisches zuführbar.

Zusätzlich zu dem bei Brennstoffzellensystemen allgemein vorhandenen katalytischen Brenner, in welchem der Restwasserstoff, der in dem eine Brennstoffzelle verlassenden Gasgemisch noch enthalten sein kann, verbrannt werden kann und somit Wärme bereitgestellt werden kann, um andere Systembereiche in einem Fahrzeug zu erwärmen, welcher katalytische Brenner jedoch noch nicht genutzt werden kann, um das Brennstoffzellensystem vorzuerwärmen, so lange dieses noch nicht in Betrieb ist, ist erfindungsgemäß ein weiterer Brenner vorgesehen, der die zum Starten des Brennstoffzellensystems erforderliche Vorerwärmung bereitstellen kann. Dieser zusätzliche brennstoffbetriebene, also beispielsweise mit Dieselkraftstoff oder sonstigen fossilen bzw. kohlenwasserstoffhaltigen Kraftstoffen betreibbare Brenner kann jedoch nicht nur dazu genutzt werden, das Brennstoffzellensystem an sich zu erwärmen, sondern kann auch als Zuheizer oder als Standheizer genutzt werden.

Um durch Funktionen- bzw. Baugruppenverschmelzung den Aufbau des erfindungsgemäßen Systems weiter vereinfachen zu können, wird vorgeschlagen, dass der katalytische Brenner ein Gebläse aufweist, durch welches Luft zur Umsetzung in dem katalytischen Brenner oder/und zur Umsetzung in dem brennstoffbetriebenen Brenner förderbar ist. Es ist also für den katalytischen .Brenner und für den brennstoffbetriebenen Brenner ein gemeinsames Gebläse vorgesehen, so dass die durch dieses Gebläse geförderte Luft zunächst den katalytischen Brenner durchströmen kann, und dann den brennstoffbetriebenen Brenner durchströmen kann. Je nachdem, welcher dieser beiden Brenner dann momentan betrieben wird, wird die durch das Gebläse geförderte Luft in dem einen oder in dem anderen Brenner zur Wärmeerzeugung umgesetzt. Dabei kann vorzugsweise zur weiteren Funktionenverschmelzung vorgesehen sein, dass durch das Gebläse Luft zur Brennstoffzelle förderbar ist.

Um die im katalytischen Brenner einerseits und im brennstoffbetriebenen Brenner andererseits jeweils bei Ablaufen einer chemischen Reaktion (katalytische Reaktion bzw. Verbrennung) erzeugte Wärme möglichst effizient nutzen zu können, wird vorgeschlagen, dass in Strömungsrichtung zwischen dem katalytischen Brenner und dem brennstoffbetriebenen Brenner eine erste Wärmetauscheranordnung zur Übertragung von in dem katalytischen Brenner erzeugter Wärme auf ein erstes Wärmeträgermedium vorgesehen ist und dass stromabwärts des brennstoffbetriebenen Brenners eine zweite Wärmetauscheranordnung zur Übertragung von in dem brennstoffbetriebenen Brenner erzeugter Wärme auf ein zweites Wärmeträgermedium vorgesehen ist.

Eine sehr wirkungsvolle Erwärmung des Gaserzeugungssystems kann dadurch erlangt werden, dass das Wärmeträgermedium oder/und die Verbrennungsprodukte des brennstoffbetrieberien Brenners oder/und des katalytischen Brenners dem Gaserzeugungssystem oder/und der Brennstoffzelle zur Erwärmung zuführbar sind. Weiterhin ist es grundsätzlich möglich, dass das Wärmeträgermedium des brennstoffbetriebenen Brenners oder/und des katalytischen Brenners dem Gaserzeugungssystem als Reaktionsstoff zur Erzeugung des wasserstoffhaltigen Gasgemisches zuführbar ist.

Um insbesondere bei vergleichsweise niedrigen Umgebungstemperaturen eine weiter beschleunigte Vorerwärmung des Brennstoffzellensystems, insbesondere des Gaserzeugungssystems desselben, erlangen zu können, wird vorgeschlagen, dass dem Gaserzeugungssystem ein weiterer brennstoffbetriebener Brenner zugeordnet ist zur Erzeugung eines Stroms erwärmten Gases zur Einspeisung in eine Wärmetauscheranordnung des Gaserzeugungssystems oder/und zur Einspeisung in einen Reformer des Gaserzeugungssystems. Um bei diesem System die Erwärmungseffizienz dann weiter verbessern zu können, wird vorgeschlagen, dass dem Strom erwärmten Gases Wasser beimischbar ist. Durch das Beimischen von Wasser in den durch diesen weiteren brennstoffbetriebenen Brenner bereitgestellten erwärmten Gasstrom wird ein erwärmtes Medium bereitgestellt, das dadurch, dass es Wasser bzw. Wasserdampf enthält, eine deutlich vergrößerte Wärmespeicherkapazität hat und somit zur deutlich verbesserten Wärmeübertragung auf beispielsweise das Gaserzeugungssystem beiträgt.

Das Brennstoffzellensystem kann eine Brenneranordnung umfassen mit einem stromaufwärtigen ersten Zuführbereich zur Zufuhr von Luft vermittels eines Luftfördergebläses oder/und zur Zufuhr eines wasserstoffhaltigen Gasgemisches, einen ersten Brennerbereich mit einer Katalysatoranordnung zur Umsetzung des wasserstoffhaltigen Gasgemisches zur Wärmeerzeugung, stromabwärts des ersten Brennerbereichs einen zweiten Brennerbereich mit einem zweiten Zuführbereich zur Zufuhr von Brennstoff zur Bildung eines zündfähigen Brennstoff/Luft-Gemisches zusammen mit in dem ersten Zuführbereich zugeführter Luft, sowie stromabwärts des zweiten Brennerbereichs eine Wärmetauscheranordnung zur Übertragung von im ersten Brennerbereich oder/und im zweiten Brennerbereich erzeugter Wärme auf ein Wärmeträgermedium.

Gemäß diesem Erfindungsaspekt sind also zwei Brennerbereiche strömungstechnisch aufeinander folgend vorgesehen, was zu dem besonderen Vorteil führt, dass ein gemeinsames Luftfördergebläse dazu genutzt werden kann, zu diesen beiden Brennerbereichen Luft jeweils zur Wärmeerzeugung zu liefern.

Um dabei Beschädigungen im Bereich des Katalysatormaterials des ersten Brennerbereichs durch Rückzündungen bzw. zu hohe Temperaturen in der auf den zweiten Brennerbereich folgenden Wärmetauscheranordnung vermeiden zu können, wird weiter vorgeschlagen, dass zwischen dem ersten Brennerbereich und dem zweiten Brennerbereich oder/und dem zweiten Brennerbereich und der Wärmetauscheranordnung eine Flammsperre angeordnet ist.

Um insbesondere beim zweiten Brennerbereich einen effizienten Betrieb sicherstellen zu können,weist der zweite Brennerbereich eine Brennkammer auf, in welcher die durch das Luftfördergebläse geförderte Luft und in einem Brennstoffverdampfer erzeugter Brennstoffdampf unter Einsatz eines Zündorgans unter Flammbildung zur Verbrennung bringbar sind.

Gemäß diesem Erfindungsaspekt sind also zwei Brennerbereiche strömungstechnisch aufeinander folgend vorgesehen, was zu dem besonderen Vorteil führt, dass ein gemeinsames Luftfördergebläse dazu genutzt werden kann, zu diesen beiden Brennerbereichen Luft jeweils zur Wärmeerzeugung zu liefern.

Um dabei Beschädigungen im Bereich des Katalysatormaterials des ersten Brennerbereichs durch Rückzündungen bzw. zu hohe Temperaturen in der auf den zweiten Brennerbereich folgenden Wärmetauscheranordnung vermeiden zu können, wird weiter vorgeschlagen, dass zwischen dem ersten Brennerbereich und dem zweiten Brennerbereich oder/und dem zweiten Brennerbereich und der Wärmetauscheranordnung eine Flammsperre angeordnet ist.

Weiter kann zum Erhöhen der Wärmeübertragungseffizienz vorgesehen sein, dass zwischen dem ersten Brennerbereich und dem zweiten Brennerbereich eine weitere Wärmetauscheranordnung zur Übertragung von im ersten Brennerbereich erzeugter Wärme auf ein Wärmeträgermedium vorgesehen ist.

Es ist beispielsweise möglich, dass der Brennstoffverdampfer ein flüssigen Brennstoff aufnehmendes poröses Verdampfermedium und diesem zugeordnet eine Heizeinrichtung zur Brennstoffdampferzeugung aufweist. Der brennstoffbetriebene Brenner arbeitet dabei also nach dem Prinzip eines so genannten Verdampferbrenners.

Bei einer bevorzugten konstruktiven Ausführung kann dabei weiter vorgesehen sein, dass der Brennstoffverdampfer ein in Richtung stromabwärts offenes Verdampfergehäuse aufweist, in welches zu verdampfender Brennstoff einleitbar ist und welches von von dem Luftfördergebläse herangeförderter Luft zur Durchmischung derselben mit Brennstoffdampf stromabwärts des Verdampfergehäuses umströmbar ist.

Die vorliegende Erfindung wird nachfolgend mit Bezug auf die beiliegenden Zeichnungen detailliert beschrieben. Es zeigt:
- Fig. 1: eine blockbildartige Darstellung eines Brennstoffzellensystems gemäß einer ersten Ausgestaltungsform;
- Fig. 2: eine prinzipielle Darstellung einer bei dem System der Fig. 1. einsetzbaren Brenneranordnung;
- Fig. 3: eine der Fig. 1 entsprechende Ansicht eines alternativ aufgebauten Systems;
- Fig. 4: eine blockbildartige Darstellung eines Brennstoffzellensystems gemäß einer weiteren Ausgestaltungsform;
- Fig. 5: eine weitere blockbildartige Darstellung eines Brennstoffzellensystems gemäß einer weiteren Ausgestaltungsform

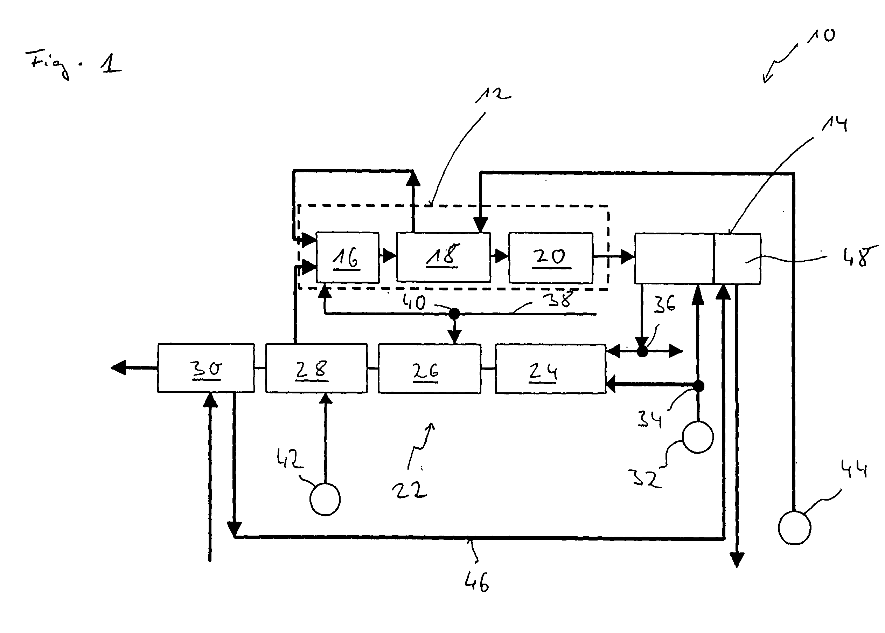

In Fig. 1 ist ein erfindungsgemäßes System mit 10 bezeichnet. Dieses erfindungsgemäße Brennstoffzellensystem 10 umfasst als wesentliche Systembereiche zum einen ein mit Strichlinie umrissenes Gaserzeugungssystem 12 zur Erzeugung eines wasserstoffhaltigen Gasgemisches sowie zum anderen eine dieses wasserstoffhaltige Gasgemisch aufnehmende Brennstoffzelle 14. Das Gaserzeugungssystem 12 selbst umfasst als wesentliche Komponenten einen Reformer 16, in welchem Luft, Wasser und wasserstoffhaltiger Brennstoff zu einem wasserstoffhaltigen Gasgemisch umgesetzt werden, darauf folgend eine Wärmetauscheranordnung 18, in welcher das im Reformer 16 erzeugte Reformat gekühlt wird, sowie eine Gasreinigungsstufe 20, in welcher das wasserstoffhaltige Gasgemisch von in der Brennstoffzelle 14 störenden bzw. diese möglicherweise schädigenden Bestandteilen gereinigt wird.

Das erfindungsgemäße Brennstoffzellensystem umfasst ferner eine allgemein mit 22 bezeichnete Brenneranordnung. Diese Brenneranordnung 22, wie sie in Fig. 1 dargestellt ist, weist in Strömungsrichtung aufeinander folgend einen katalytischen Brenner 24, einen brennstoffbetriebenen Brenner 26, eine erste Wärmetauscheranordnung 28 sowie eine zweite Wärmetauscheranordnung 30 auf. In Zuordnung zu dem katalytischen Brenner 24 ist ein Luftfördergebläse 32 vorgesehen, welches über ein wahlweise umschaltbares Ventil 34 Luft entweder in den katalytischen Brenner 24 oder in die Brennstoffzelle 14 oder ggf. bei entsprechendem Teilungsverhältnis sowohl in den katalytischen Brenner 24 als auch in die Brennstoffzelle 14 fördern kann. Ferner wird über ein ebenfalls wahlweise umschaltbares Ventil 36 dem katalytischen Brenner 24 ein die Brennstoffzelle 14 verlassender Gasgemischstrom zugeführt, welcher bei betriebener Brennstoffzelle 14 immer noch Wasserstoff enthält, jedoch in einem geringeren Anteil, als derjenige Gasgemischstrom, der von dem Gaserzeugungssystem 12 in die Brennstoffzelle 14 eingeleitet wird. Über das Ventil 36 kann jedoch wahlweise der die Brennstoffzelle 14 verlassende Strom auch zur Umgebung hin abgegeben werden.

Über eine Brennstoffversorgungsleitung 38 wird über ein wahlweise umschaltbares Ventil 40 Kraftstoff, also beispielsweise Dieselkraftstoff, Benzin oder sonstiger fossiler, flüssiger Kraftstoff, wahlweise in den brennstoffbetriebenen Brenner 26, den Reformer 16 oder beide diese Systembereiche 26, 16 eingeleitet. Ferner wird durch einen Kompressor 42 Luft als Wärmeträgermedium durch die erste Wärmetauscheranordnung 28 hindurch zu dem Reformer 1 6 geleitet. Durch einen weiteren Kompressor bzw. eine Pumpe 44 wird Wasser zu dem Gaserzeugungssystem 12 geleitet, und zwar derart, dass es zunächst in die Wärmetauscheranordnung 18 des Gaserzeugungssystems 12 eingeleitet wird und nach dem Durchströmen dieser Wärmetauscheranordnung 18 in den Reformer 16 eingeleitet wird. Bei Einleitung von Brennstoff über die Brennstoffversorgungsleitung 38, Luft über die Wärmetauscheranordnung 28 und Wasser über die Wärmetauscheranordnung 18 kann im Reformer 16 dann ein wasserstoffhaltiges Gasgemisch erzeugt werden. In einem allgemein mit 46 bezeichneten Wärmeträgermediumkreislauf zirkuliert Wasser, welches sowohl durch die zweite Wärmetauscheranordnung 30 der Brenneranordnung 22 als auch eine Wärmetauscheranordnung 48 der Brennstoffzelle 14 strömt, um dabei Wärme aufzunehmen bzw. abzugeben.

Der Betrieb des in Fig. 1 dargestellten Brennstoffzellensystems wird nachfolgend beschrieben. Es sei hierzu zunächst angenommen, dass das gesamte System 10 in einem kalten Zustand ist, also einem Zustand, in welchem die verschiedenen katalytisch induzierten Reaktionen im Reformer 16, in der Brennstoffzelle 14 und im katalytischen Brenner 24 noch nicht ablaufen können. Es wird daher zunächst der brennstoffbetriebene Brenner 26 aktiviert, und zwar dadurch, dass durch entsprechende Schaltung des Ventils 40 der Brennstoff in diesen eingespeist wird und weiterhin durch entsprechende Schaltung des Ventils 34 die vom Gebläse 32 geförderte Luft durch den katalytischen Brenner 24 hindurch ebenfalls in den brennstoffbetriebenen Brenner 26 eingeleitet wird. In diesem wird dann ein zündfähiges Gemisch aus Brennstoffdampf und Verbrennungsluft erzeugt, das zur Verbrennung gebracht wird. Die Verbrennungsabgase durchströmen die beiden Wärmetauscheranordnungen 28 und 30. In der Wärmetauscheranordnung 28 wird dabei Wärme auf die zum Gaserzeugungssystem 12 bzw. zum Reformer 16 desselben geförderte Luft übertragen, so dass nunmehr erwärmte Luft das Gaserzeugungssystem 12 und die Brennstoffzelle 14 durchströmen kann. Diese erwärmte Luft verlässt über das Ventil 36 die Brennstoffzelle 14 und kann nunmehr entweder zur Umgebung abgegeben werden, oder kann als Verbrennungsluft über den katalytischen Brenner 24 wieder zum brennstoffbetriebenen Brenner 26 gefördert werden. In diesem Falle kann während der Startphase auf das Betreiben des Gebläses 32 verzichtet werden, wenn der durch den Kompressor 42 bereitgestellte Luftstrom so eingestellt wird, dass er bei entsprechender Brennstoffzufuhr zu einem geeigneten, zündfähigen Brennstoff/Luft-Gemisch führt. Ansonsten ist es grundsätzlich auch möglich, nur das Gebläse 32 zu betreiben oder bei entsprechendem Luftbedarf sowohl das Gebläse 32 als auch den Kompressor 42 zu betreiben.

Weiterhin erwärmen die den brennstoffbetriebenen Brenner 26 verlassenden Verbrennungsabgase in der zweiten Wärmetauscheranordnung 30 das im Kreislauf 46 in dieser Phase in der Richtung der Pfeile zirkulierende Wasser. Dieses Wasser trägt in der Wärmetauscheranordnung 48 ebenfalls zur Erwärmung der Brennstoffzelle bei, ebenso wie die erwärmte Luft, welche nach Durchströmen der Wärmetauscheranordnung 28 und des Gaserzeugungssystems 12 in die Brennstoffzelle 14 eintritt.

Sind in den verschiedenen Systembereichen ausreichend hohe Temperaturen zur Gaserzeugung einerseits und zur Aktivierung der Brennstoffzelle 14 andererseits erreicht, so wird die Brennstoffzelle 14 in Betrieb gesetzt. Hierzu ist es weiterhin erforderlich, dass nunmehr der über die Leitung 38 herangeführte Brennstoff über das Ventil 40 in den Reformer 16 eingeleitet wird. Unter Einsatz der in der Wärmetauscheranordnung 28 vorerwärmten Luft, des in der Wärmetauscheranordnung 18 ggf. ebenfalls vorerwärmten Wassers und des zugeführten Brennstoffs wird, wie vorangehend bereits erwähnt, im Reformer 16 dann ein wasserstoffhaltiges Gas erzeugt, welches in der Wärmetauscheranordnung 18 wieder gekühlt wird und dabei dann Wärme auf das in den Reformer 16 einzuleitende Wasser überträgt.

Bei der in der Brennstoffzelle 14 ablaufenden Reaktion wird nunmehr Elektrizität erzeugt, und das die Brennstoffzelle 14 verlassende Gasgemisch ist ein wasserstoffentreichertes, jedoch nicht wasserstofffreies Gasgemisch. Dieses Gasgemisch wird bei Bedarf nunmehr in den katalytischen Brenner 24 eingeleitet. Weiterhin wird nunmehr unter der Förderwirkung des Gebläses 32 Luft in den katalytischen Brenner 24 eingeleitet, wobei das Ventil 34 so geschaltet ist, dass auch ein Teil der Luft in die Brennstoffzelle 14 gelangt, um dort zusammen mit dem in diese ebenfalls eingeleiteten Wasserstoff zur Stromgewinnung umgesetzt zu werden. Die in den katalytischen Brenner 24 eingeleitete Luft und das in diesen ebenfalls eingeleitete wasserstoffentreicherte Gasgemisch werden unter Durchführung einer katalytischen Reaktion und unter Wärmeerzeugung umgesetzt, wobei bei dieser Umsetzungsreaktion Wasser bzw. Wasserdampf entsteht. Die Wärme transportierenden Reaktionsprodukte, die im katalytischen Brenner 24 erzeugt werden, durchströmen den nunmehr deaktivierten brennstoffbetriebenen Brenner 26 und gelangen somit zu der Wärmetauscheranordnung 28 bzw. der Wärmetauscheranordnung 30. Ein Großteil der in diesen Reaktionsprodukten transportierten Wärme wird in der Wärmetauscheranordnung 28 auf die durch den Kompressor 42 durch diese hindurch geförderte und in den Reformer 16 einzuleitende Luft übertragen, so dass auch diese bei Eintritt in den nunmehr zur Wasserstofferzeugung arbeitenden Reformer 16 bereits eine geeignete erhöhte Temperatur aufweist. Da weiterhin im Betrieb der Brennstoffzelle diese nicht mehr erwärmt werden muss, sondern, je nach Brennstoffzellentyp, mehr oder weniger stark gekühlt werden muss, wird nunmehr über den Kreislauf 46 Wärme auf das darin zirkulierende Wasser in der Wärmetauscheranordnung 48 übertragen, wobei hierzu beispielsweise die Zirkulationsrichtung zu der dargestellten Zirkulationsrichtung umgekehrt sein kann. Weiterhin sei darauf hingewiesen, dass selbstverständlich in diesem Kreislauf 46 eine das Wasser fördernde Pumpe vorgesehen sein kann, ebenso wie eine weitere nicht dargetellte Wärmetauscheranordnung, in welcher dann Wärme, die das in dem Kreislauf 46 zirkulierende Wasser entweder in der Wärmetauscheranordnung 30 oder in der Wärmetauscheranordnung 48 aufgenommen hat, zur Erwärmung eines Fahrzeuginnenraums auf in diesen einzuleitende Luft übertragen werden kann.

Das vorangehend mit Bezug auf die Fig. 1 beschriebene Brennstoffzellensystem 10 nutzt also insbesondere im Bereich der Brenneranordnung 22 sehr effizient einen ohnehin vorhandenen bzw. erforderlichen Luftstrom, welcher durch das Gebläse 32 bereitgestellt wird. Hier ist also eine Verschmelzung von Systembereichen vorhanden, die den Aufbau vereinfacht und ein effizient arbeitendes Gesamtsystem zur Folge hat.

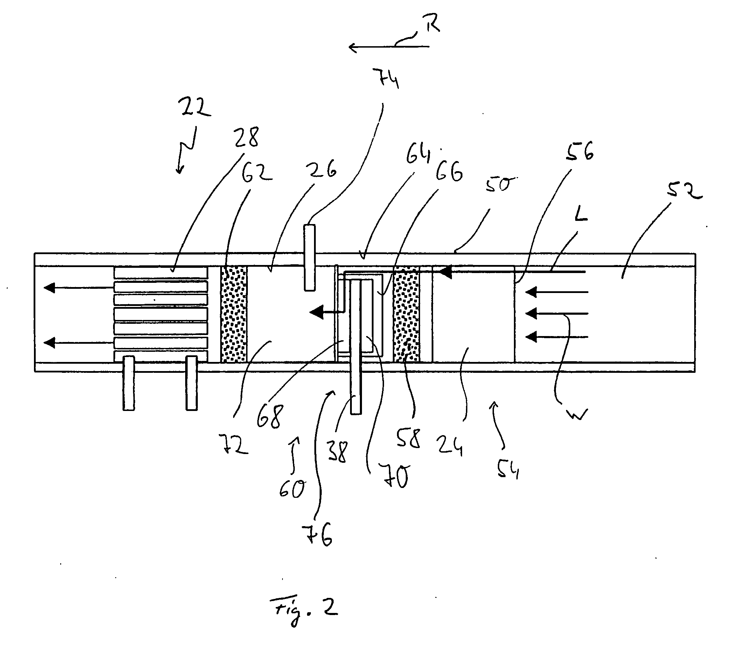

Eine derartige Brenneranordnung 22, wie sie bei dem in Fig. 1 gezeigten System eingesetzt werden kann, ist in Fig. 2 in prinzipieller Darstellung erkennbar. Diese Brenneranordnung 22 umfasst ein rohrartiges Gehäuse 50, dem in einem stromaufwärtigen ersten Zuführbereich 52 von dem Gebläse 32 oder dem Kompressor 42 Luft L zugeführt wird. Weiterhin wird in diesem stromaufwärtigen Zuführbereich 52, wie durch die Pfeile W angedeutet, das wasserstoffentreicherte Gas von der Brennstoffzelle 14 zugeführt. In einem in der Strömungsrichtung R dann folgenden und im Wesentlichen den katalytischen Brenner 24 bildenden ersten Brennerbereich 54 ist ein Katalysatormaterial 56 vorgesehen. Auf diesen ersten Brennerbereich 54 folgt in der Strömungsrichtung R nach einer ersten Flammsperre 58 ein zweiter Brennerbereich 60, der im Wesentlichen durch den vorangehend bereits angesprochenen brennstoffbetriebenen Brenner 26 bereitgestellt ist. Diesem brennstoffbetriebenen Brenner 26 folgt dann eine zweite Flammsperre 62 sowie die Wärmetauscheranordnung 28. Die in der Fig. 1 ebenfalls dargestellte zweite Wärmetauscheranordnung 30 ist in Fig. 2 nicht erkennbar, kann jedoch selbstvertändlich in entsprechender Weise einen das zu erwärmende Medium durchströmbaren Volumenbereich aufweisen.

Der brennstoffbetriebene Brenner 26 umfasst folgend auf die erste Flammsperre 58 einen Brennstoffverdampfer 64. Dieser weist ein nach stromaufwärts abgeschlossenes, nach stromabwärts offenes, topfartiges Verdampfergehäuse 66 auf. In diesem Verdampfergehäuse 66 ist ein poröses Verdampfermedium 68 und diesem ggf. zugeordnet eine elektrisch betreibbare Heizeinrichtung 70 angeordnet. In das poröse Verdampfermedium 68 wird durch die vorangehend bereits angesprochene Leitung 38 Brennstoff eingeleitet. Bei Erregung der elektrisch betreibbaren Heizeinrichtung 70 wird in dem porösen Verdampfermedium vorhandener Brennstoff abgedampft. Das Verdampfergehäuse 66 kann an seinem stromaufwärtigen und seinem Umfangsbereich von den den ersten Brennerbereich 54 durchströmenden Gasen, insbesondere auch der Luft L, umströmt werden. Diese Luft L durchmischt sich in dem stromabwärts offenen Bereich des Verdampfers 64 mit dem darin abdampfenden Brennstoff und erzeugt somit ein zündfähiges Gemisch aus Brennstoff, Dampf und Luft, das in einer Brennkammer 72 des brennstoffbetriebenen Brenners 26 durch ein Glühzündorgan 74 zur Verbrennung gezündet werden kann. Es sei hier darauf hingewiesen, dass selbstverständlich im Bereich des Verdampfers 66 dafür gesorgt werden kann, dass die zusammen mit dem abdampfenden Brennstoff zu verbrennende Luft auch in das poröse Medium 68 eintritt und somit zu einer verstärkten Abdampfung führt.

Je nachdem, welcher der beiden Brennerbereiche 54, 60 betrieben wird, gelangen die wärmetransportierenden Verbrennungsprodukte zur Wärmetauscheranordnung 28 bzw. auch zur Wärmetauscheranordnung 30, um dort Wärme auf das diese durchströmende Wärmeträgermedium, also Luft bzw. Wasser, zu übertragen.

Man erkennt bei der in Fig. 2 dargestellten Brenneranordnung 22 als elementares Prinzip die in Strömungsrichtung R aufeinander folgende Positionierung der beiden Brennerbereiche 54, 60, für welche eine gemeinsame Luftversorgung vorgesehen ist. Im stromaufwärtigen ersten Zuführbereich 52 wird weiterhin das für den Betrieb des ersten Brennerbereichs 54 erforderliche wasserstoffhaltige Gasgemisch W zugeführt, während in einem im Wesentlichen durch die Leitung 38 bereitgestellten zweiten bzw. stromabwärtigen Zuführbereich 76 der für den Betrieb des Brennerbereichs 60 erforderliche Brennstoff zugeführt wird.

Die beiden zwischen den Brennerbereichen 54, 60 und dem Brennerbereich 60 und der ersten Wärmetauscheranordnung 28 vorgesehenen Flammsperren 58, 62 sorgen dafür, dass einerseits durch Rückzündungen Beschädigungen im Katalysatormaterial 56 verhindert werden können, und dass andererseits die Flammen aus der Brennkammer 72 nicht unmittelbar in den Bereich der Wärmetauscheranordnung 28 und des Verdampfergehäuses 66 gelangen können und dort nicht lokal zu einer übermäßigen Erhitzung beitragen können.

Es ist selbstverständlich, dass prinzipiell die beiden Brennerbereiche 54, 60 gleichzeitig betrieben werden können, wenn ausreichend Luft zugeführt wird, so dass nicht der gesamte in dieser Luft enthaltene Sauerstoff bereits im Brennerbereich 54 zur Reaktion gebracht wird. Gleichwohl erkennt man aus dem vorangehend beschriebenen Funktionsprinzip des in Fig. 1 dargestellten Brennstoffzellensystems 10, dass grundsätzlich das gleichzeitige Betreiben des katalytischen Brenners 24 und des brennstoffbetriebenen Brenners 26 nicht erforderlich ist. Das gleichzeitige Betreiben kann jedoch zur Abgasnachbehandlung erforderlich sein.

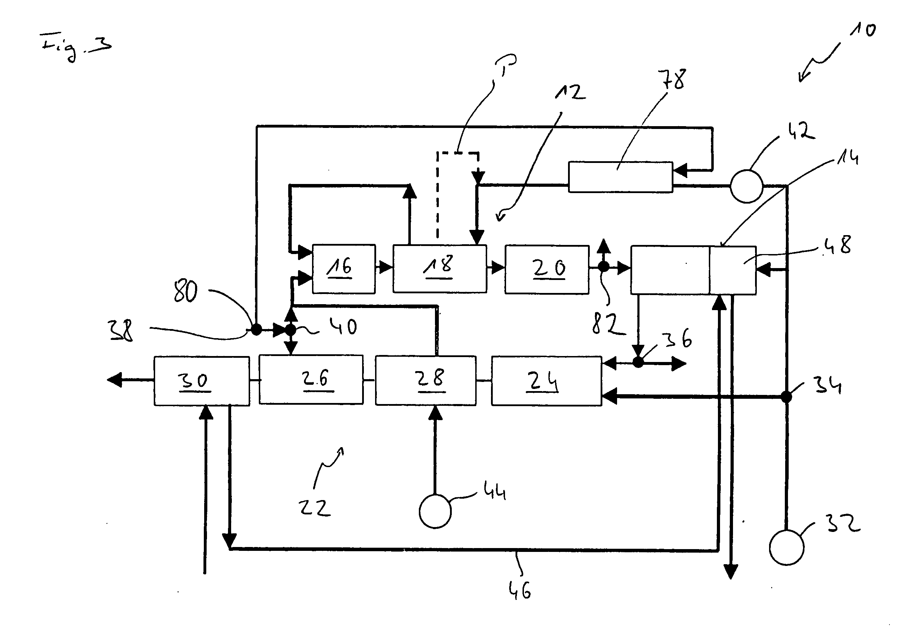

Ein abgewandeltes Brennstoffzellensystem 10 ist in Fig. 3 dargestellt. Man erkennt zunächst, dass in der Brenneranordnung 22 die Reihenfolge des brennstoffbetriebenen Brenners 26 und der ersten Wärmetauscheranordnung 28 vertauscht worden ist. Die erste Wärmetauscheranordnung 28 folgt nunmehr unmittelbar auf den katalytischen Brenner 24 und überträgt die dort erzeugte Wärme auf das durch die Pumpe 44 zum Reformer 16 des Gaserzeugungssystems 12 geförderte Wasser. Die zur Wasserstofferzeugung erforderliche Luft wird zunächst unter der Förderwirkung des Gebläses 32 und über das Ventil 34 in Richtung zum katalytischen Brenner 24 bzw. zur Brennstoffzelle 14 und auch in Richtung zu dem Kompressor 42 geleitet, der nunmehr den erforderlichen Druck zur Einspeisung der Luft in das Gaserzeugungssystem 12 bereitstellt. Dem Kompressor 42 ist ein weiterer brennstoffbetriebener Brenner 78 nachgeschaltet. Der in der Ausgestaltungsform gemäß Fig. 3 erkennbare zusätzliche brennstoffbetriebene Brenner kann von herkömmlichem Aufbau sein und als Verdampfungsbrenner arbeiten, ebenso wie der erkennbare brennstoffbetriebene Brenner 26. Die vom Kompressor 42 geförderte Luft durchströmt den brennstoffbetriebenen Brenner 78, solange dieser nicht aktiviert ist, tritt in die Wärmetauscheranordnung 18 des Gaserzeugungssystems 12 ein, und verlässt diese Wärmetauscheranordnung 18 wieder, um dann zum Reformer 16 geleitet zu werden. Der über die Leitung 38 herangeführte Brennstoff wird nunmehr über das Ventil 44 und ein weiteres Ventil 80 zum brennstoffbetriebenen Brenner 26, zum brennstoffbetriebenen Brenner 78 und zum Reformer 16 geleitet, wobei je nach Beschaltung der Ventile 40, 80 hier wahlweise nur einer oder mehrere dieser Bereiche mit flüssigem Brennstoff versorgt werden können.

Dieses in Fig. 3 gezeigte Brennstoffzellensystem wird so betrieben, dass zunächst wieder der brennstoffbetriebene Brenner 26 und zusätzlich auch der brennstoffbetriebene Brenner 78 aktiviert werden. Dazu wird zumindest das auch dem katalytischen Brenner 24 zugeordnete Gebläse 32, vorzugsweise zusätzlich jedoch auch der Kompressor 42, aktiviert. Die im brennstoffbetriebenen Brenner 26 erzeugte Wärme wird in der zweiten Wärmetauscheranordnung 30 nunmehr auf das im Kreislauf 46 zirkulierende Wasser und von diesem auf die Wärmetauscheranordnung 48 der Brennstoffzelle 14 übertragen. Die im brennstoffbetriebenen Brenner 78 erzeugte Wärme wird in den Verbrennungsprodukten desselben zur Wärmetauscheranordnung 18 transportiert. Dabei kühlen sich diese Verbrennungsprodukte unter gleichzeitiger Erwärmung der Wärmetauscheranordnung 18 ab und treten dann in den Reformer 16 ein. Auch im Reformer 16 wird Wärme abgegeben, so dass diese Verbrennungsprodukte nunmehr mit einer Temperatur in die Wärmetauscheranordnung 18 eintreten, die geringer ist als diejenige Temperatur, die die Verbrennungserzeugnisse beim Verlassen des brennstoffbetriebenen Brenners 78 und beim erstmaligen Eintreten in die Wärmetauscheranordnung 18 hatten. Dies führt dazu, dass die weiter zur Gasreinigungsstufe 20 geleiteten Verbrennungsprodukte wieder etwas erwärmt werden. Dies führt zu einer sehr gleichmäßigen Verteilung der Wärme auf die verschiedenen Systembereiche des Gaserzeugungssystems 12 und auch der Brennstoffzelle 14.

Der Brennstoffzelle 14 ist jedoch nunmehr ein weiteres Ventil 82 vorgeschaltet. Durch dieses Ventil ist es möglich, wahlweise das das Gaserzeugungssystem 12 verlassende Gas zur Brennstoffzelle 14 zu leiten oder nach außen hin abzugeben. In der Startphase des Systems, in welcher insbesondere im brennstoffbetriebenen Brenner 78 ein sehr hoher Kohlenmonoxidanteil erzeugt wird, wird dieses Ventil 82 so geschaltet, dass nach dem Durchströmen des Gaserzeugungssystems 12 diese Verbrennungsprodukte nicht in die Brennstoffzelle 14 gelangen können, da sie dort zu Beschädigungen des Katalysatormaterials führen können. Erst dann, wenn diese Verbrennungserzeugnisse einen geringeren CO-Gehalt aufweisen, können sie durch entsprechende Umschaltung des Ventils 82 auch durch die Brennstoffzelle 14 hindurchgeleitet werden und somit auch zusätzlich zu deren Erwärmung beitragen bzw. ggf. bei entsprechender Schaltung des Ventils 36 auch in den katalytischen Brenner 24 zur Erwärmung desselben bzw. des Katalysatormaterials eingeleitet werden. Da hierbei ggf. jedoch eine Beeinträchtigung des Betriebs des brennstoffbetriebenen Brenners 26 erzeugt werden kann, kann grundsätzlich das die Brennstoffzelle 14 verlassende Verbrennungserzeugnis des brennstoffbetriebenen Brenners 78 über das Ventil 36 nach außen hin bzw. in ein Abgasreinigungssystem abgegeben werden.

Wie durch einen gestrichelten Pfeil P angedeutet, ist es möglich, den Verbrennungsprodukten, die den brennstoffbetriebenen Brenner 78 verlassen, zusätzlich einen bestimmten Wasseranteil beizumischen. Aufgrund der hohen Temperatur dieser Verbrennungsprodukte wird dieses Wasser verdampfen und als Wasserdampf durch die Wärmetauscheranordnung 18 und den Reformer 16 hindurch transportiert werden. Auf diese Art und Weise kann beispielsweise etwa ein Drittel des gesamten in den Reformer 16 einzuspeisenden Wassers zuvor zu einer verstärkten Erwärmung der Wärmetauscheranordnung 18 aufgrund der höheren Wärmespeicherkapazität der mit Wasserdampf angereicherten Verbrennungsprodukte genutzt werden.

Sind bei diesem in Fig. 3 gezeigten System die erforderlichen Temperaturen erreicht, so werden die beiden brennstoffbetriebenen Brenneranordnungen 26, 78 deaktiviert, und es kann nunmehr im katalytischen Brenner 24 bei gleichzeitig auch betriebener Brennstoffzelle 14 die Reaktion unter Umsetzung von Wasserstoff und Luftsauerstoff ablaufen, deren Reaktionswärme dann in der Wärmetauscheranordnung 28 auf das zum Reformer 1 6 geleitete Wasser übertragen wird.

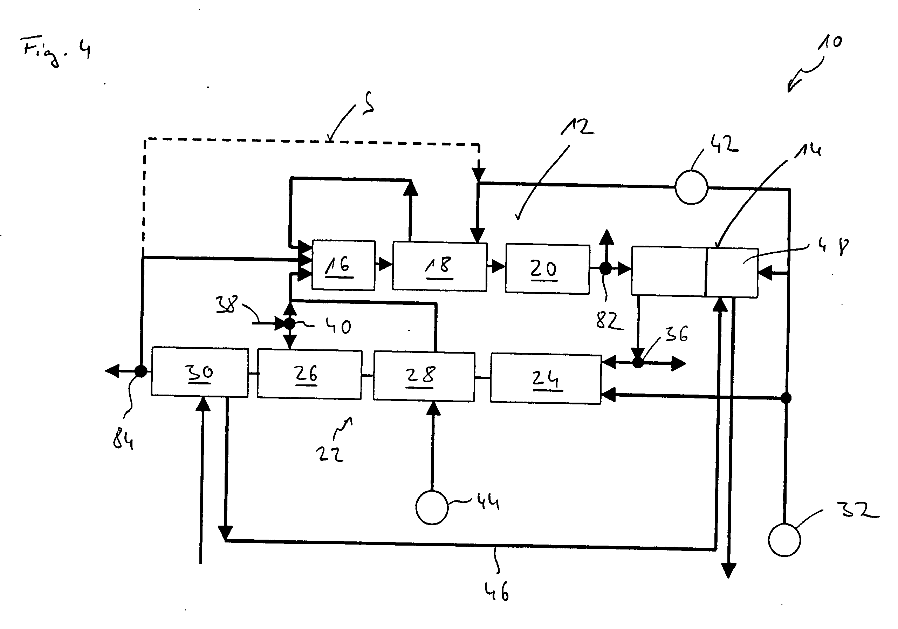

Eine weitere Ausgestaltungsform eines erfindungsgemäßen Brennstoffzellensystems ist in Fig. 4 gezeigt. Dieses ist im Wesentlichen so aufgebaut, wie das vorangehend mit Bezug auf die Fig. 3 beschriebene Brennstoffzellensystem. Man erkennt jedoch, dass im Abgasstrom der Brenneranordnung 22 folgend auf die zweite Wärmetauscheranordnung 30 nunmehr ein Umschaltventil 84 vorgesehen ist. Durch dieses Umschaltventil 84 können die Verbrennungsprodukte des brennstoffbetriebenen Brenners 26 wahlweise in den Reformer 16 des Gaserzeugungssystems 12 geleitet werden. Hier ersetzt also der brennstoffbetriebene Brenner 26 den in Fig. 3 erkennbaren zusätzlichen brennstoffbetriebenen Brenner 78 insofern, als er einerseits, ebenso wie in Fig. 3 erkennbar, in der Wärmetauscheranordnung 30 zur Erwärmung es im Kreislauf 46 zirkulierenden und die Brennstoffzelle 14 erwärmenden Wassers beiträgt, und indem er andererseits mit seinen die Wärmetauscheranordnung 30 verlassenden, immer noch warmen Verbrennungsabgasen zur Erwärmung des Gaserzeugungssystems 12 beiträgt. Auch hier wird so vorgegangen, dass in der Startphase des brennstoffbetriebenen Brenners 26 die das Brennstofferzeugungssystem 12 durchströmenden Verbrennungsprodukte durch entsprechende Schaltung des Ventils 82 nicht zur Brennstoffzelle 14 geleitet werden. Erst wenn der CO-Gehalt auf ein für die Brennstoffzelle unschädliches Maß gesunken ist, kann durch Umschalten des Ventils 82 dafür gesorgt werden, dass auch die Brennstoffzelle 14 durch diese Verbrennungsprodukte vorerwärmt wird.

Alternativ ist es hier, wie durch einen gestrichelten Pfeil S angedeutet, möglich, die Verbrennungsprodukte des brennstoffbetriebenen Brenners 26 nicht direkt in den Reformer 16, sondern zunächst in die Wärmetauscheranordnung 18 des Gaserzeugungssystems 12 zu leiten, so dass, ebenso wie vorangehend beschrieben, auch diese Wärmetauscheranordnung 18 vorerwärmt wird, die Verbrennungsprodukte dann den Reformer 16 unter Erwärmung desselben durchströmen und in der Wärmetauscheranordnung 18 dann wieder Wärme von in diese eintretenden Verbrennungsprodukten aufnehmen.

Bei einer Abwandlung des in Fig. 4 gezeigten Brennstoffzellensystems 10 kann das Ventil 84 zwischen dem brennstoffbetriebenen Brenner 26 und der Wärmetauscheranordnung 30 angeordnet sein, um die Verbrennungsabgase des brennstoffbetriebenen Brenners 26 oder einen durch die Stellung des Ventils 84 bestimmbaren Teil davon nicht durch die Wärmetauscheranordnung 30 zu leiten, sondern sofort ohne wesentliche Wärmeverluste zum Gaserzeugungssystem 12 zur Erwärmung desselben zu leiten.

Es sei darauf hingewiesen, dass alle vorangehend beschriebenen Brennstoffzellensysteme 10 den elementaren Vorteil aufweisen, dass aufgrund des Eingliederns eines brennstoffbetriebenen Brenners 26 oder/und 78 das Gesamtsystem zusätzlich auch in Verbindung mit dem Kreislauf 46 als Zuheizer, beispielsweise für ein Dieselaggregat, oder als Standheizung für einen Fahrzeuginnenraum betrieben werden kann. Insbesondere im Standheizungsmodus ist es weiter möglich, nach entsprechender Erwärmung des Gasreinigungssystems 12 und der Brennstoffzelle 14 die in der Brennstoffzelle 14 dann beim Betreiben derselben erzeugte elektrische Energie zur Versorgung des brennstoffbetriebenen Brenners 26 zu nutzen. Während der Startphase, in welcher die Brennstoffzelle 14 noch nicht arbeitet, ist hierfür eine externe Energiequelle erforderlich.

Weiter sei darauf hingewiesen, dass es bei allen beschriebenen Systemen möglich ist, das Gaserzeugungssystem 12 so zu gestalten, dass durch überstöchiometrische Verbrennung des in den Reformer 16 eingespeisten Brennstoffs in einem stromaufwärtigen oder einem stromabwärtigen Bereich zusätzlich Wärme bereitgestellt wird, die zu einer weiter beschleunigten Erwärmung vor allem verschiedener. Systemkomponenten des Gaserzeugungssystems 12 beiträgt.

Bei allen erfindungsgemäßen Brennstoffzellensystemen ist es selbstverständlich möglich, anstelle des/der vorangehend beschriebenen Verdampferbrenner als brennstoffbetriebene Brenner andere Typen einzusetzen. So können hier beispielsweise Zerstäuberbrenner oder Matrixbrenner ebenso zum Einsatz gelangen.

Bei einer weiteren in den Figuren nicht dargestellten Ausgestaltungsform ist es weiterhin möglich, das Gaserzeugungssystem 12 so auszugestalten, dass es zunächst ein Wasserstoff enthaltendes Gasgemisch erzeugt, das dann unter Einsatz einer Wasserstoffseparationsmembran in zwei Teilströme aufgeteilt wird. Ein erster dieser Teilströme enthält im Wesentlichen nur Wasserstoff und wird zur Brennstoffzelle 14 geleitet. Der zweite Teilstrom ist wasserstoffentreichert, enthält aber immer noch einen bestimmten Anteil an Wasserstoff. Dieser wasserstoffentreicherte Gasstrom wird dann nicht zur Brennstoffzelle 14, sondern unmittelbar zum katalytischen Brenner 24 geleitet, um dort zusammen mit Luft zur Reaktion gebracht zu werden und Wärme zu erzeugen. Bei einem derartigen System ist es weiterhin möglich, den die Brennstoffzelle 14 verlassenden Strom, welcher immer noch einen Anteil von Wasserstoff enthält, ebenso wie den wasserstoffentreicherten Gasstrom zum katalytischen Brenner 24 zu leiten, um dort den noch vorhandenen Wasserstoff zur Wärmeerzeugung nutzen zu können.

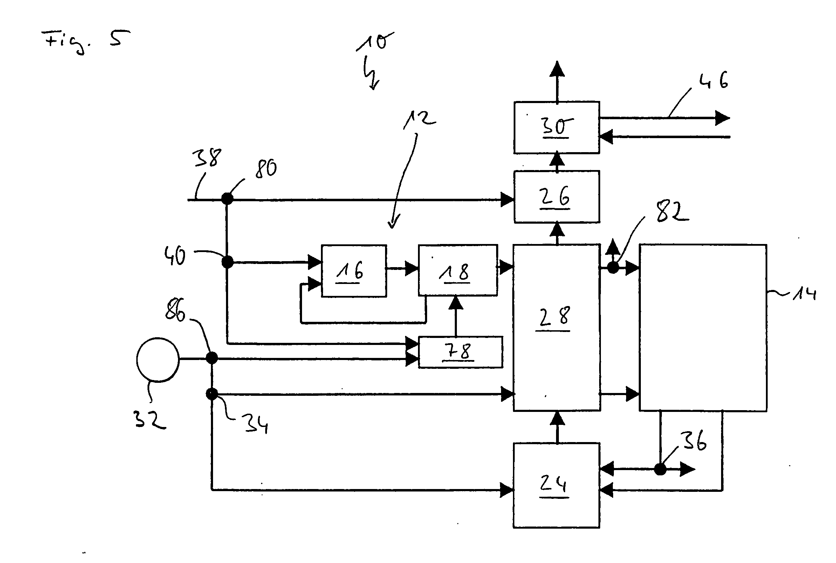

Eine weitere erfindungsgemäße Ausgestaltungsform eines Brennstoffzellensystems 10 ist in Fig. 5 gezeigt. Im Gegensatz zu den vorangehend beschriebenen Systemen, wo so genannte PEM-Brennstoffzellen eingesetzt wurden, die im Betrieb der Kühlung bedürfen, ist bei dem in Fig. 5 gezeigten System eine Hochtemperaturbrennstoffzelle, also eine so genannte SOFC-Brennstoffzelle, eingesetzt, die bei einer Betriebstemperatur von etwa 650°C arbeitet. Deshalb ist es bei dieser Brennstoffzelle nicht möglich, die für den Betrieb erforderlichen Temperaturen mit Wasser als Wärmeübertrager zu erzeugen. Bei dem in Fig. 5 gezeigten Brennstoffzellensystem ist daher auch der Wasser führende Kreislauf 46 nicht in Kontakt mit der Brennstoffzelle 14. Vielmehr erkennt man, dass das das Gaserzeugungssystem verlassende wasserstoffhaltige Gasgemisch, ohne durch eine Gasreinigungsstufe hindurchgeleitet zu werden, die Wärmetauscheranordnung 28 durchströmt und dann in die Brennstoffzelle 14 gelangt. Dem Gaserzeugungssystem 12 ist wieder ein brennstoffbetriebener Brenner 78 vorgeschaltet, dem bei entsprechender Beschaltung der Ventile 80, 40 Brennstoff zuführbar ist und bei entsprechender Beschaltung eines Ventils 86 vom Gebläse 32 oder einem Kompressor o.dgl. Luft zuführbar ist.

In der Vorwärmphase werden bei betriebenem brennstoffbetriebenem Brenner 78 durch die Verbrennung heiße Verbrennungsprodukte erzeugt, die die Wärmetauscheranordnung 18 durchströmen und in den Reformer 1 6 geleitet werden. Beim Durchströmen des Reformers 16 wird auch dieser erwärmt. Die Verbrennungsprodukte gelangen dann zum Ventil 82 und können zur Vorwärmung der Brennstoffzelle 14 auch durch diese hindurchgeleitet werden. Erforderlichenfalls ist es jedoch auch möglich, diese Verbrennungsprodukte über das Ventil 82 und ein nicht dargestelltes Abgasreinigungssystem zur Umgebung hin abzugeben. Nach ausreichender Vorwärmung des Gaserzeugungssystems 12 bzw. der Brennstoffzelle 14 wird bei deaktiviertem brennstoffbetriebenen Brenner 78 dann die Erzeugung des wasserstoffhaltigen Gasgemisches gestartet, um auch die Brennstoffzelle 14 zur Stromerzeugung betreiben zu können. Die dabei im Reformer 16 neben dem über die Ventile 80, 40 zugeführten Brennstoff erforderliche Luft wird über den brennstoffbetriebenen Brenner 78, welcher in dieser Phase jedoch nicht aktiviert ist, und die Wärmetauscheranordnung 18 in den Reformer 16 eingespeist und somit bei der Erzeugung des Reformats auch gleichzeitig vorerwärmt. Das wasserstoffentreicherte Gasgemisch, welches die Brennstoffzelle 14 verlässt, wird über das Ventil 36 zum katalytischen Brenner 24 geleitet und dort zusammen mit der über die Ventile 86, 34 zugeführten Luft zur Wärmeerzeugung umgesetzt. In der Wärmetauscheranordnung 28 wird diese Wärme dann auf die über die Ventile 86, 34 in die Brennstoffzelle 14 einzuleitende Luft übertragen, um diese vorzuwärmen.

Bei dem in Fig. 5 dargestellten System arbeitet der brennstoffbetriebene Brenner 26 mit der diesem nachgeschalteten Wärmetauscheranordnung 30 lediglich zur Erwärmung anderer Fahrzeugsystembereiche, beispielsweise als Standheizung oder als Zuheizer. Es ist jedoch auch eine Variante möglich, bei welcher die Positionierung des brennstoffbetriebenen Brenners 26 und der Wärmetauscheranordnung 28 vertauscht ist und beispielsweise die in Fig. 1 erkennbare Staffelung vorliegt. In diesem Falle kann dann der brennstoffbetriebene Brenner 26 auch in der Startphase betrieben werden, um die dort erzeugte Wärme in der Wärmetauscheranordnung 28 auf Luft zu übertragen, die dann zur Vorwärmung der Brennstoffzelle 14 in diese eingespeist wird.

## Patentansprüche

1. Brennstoffzellensystem, umfassend:
- ein Gaserzeugungssystem (12) zur Erzeugung eines wasserstoffhaltigen Gasgemisches,
- eine Brennstoffzelle (14), welcher das wasserstoffhaltige Gasgemisch zuführbar ist zur Nutzung von darin enthaltenem Wasserstoff zur Erzeugung von Elektrizität, wobei ein wasserstoffentreichertes Gasgemisch die Brennstoffzelle (14) verlässt,
- einen katalytischen Brenner (24), welchem das wasserstoffentreicherte Gasgemisch zur Wärmeerzeugung zuführbar ist,
- eine Wärmetauscheranordnung (28, 30) zur Übertragung von im katalytischen Brenner (24) erzeugter Wärme auf ein Wärmeträgermedium,
- einen auf den katalytischen Brenner (24) folgenden brennstoffbetriebenen Brenner (26) zur Verbrennung von Brennstoff unter Flammbildung,
- eine Wärmetauscheranordnung (28, 30) zur Übertragung von in dem brennstoffbetriebenen Brenner (26) erzeugter Wärme auf ein Wärmeträgermedium,
**dadurch gekennzeichnet, dass** die Verbrennungsprodukte des brennstoffbetriebenen Brenners (26) oder/und des katalytischen Brenners (24) dem Gaserzeugungssystem (12) als Reaktionsstoff zur Erzeugung des wasserstoffhaltigen Gasgemisches zuführbar sind.

2. Brennstoffzellensystem nach Anspruch 1,
**dadurch gekennzeichnet, dass** der katalytische Brenner (24) ein Gebläse (32, 42) aufweist, durch welches Luft zur Umsetzung in dem katalytischen Brenner (24) oder/und zur Umsetzung in dem brennstoffbetriebenen Brenner (26) förderbar ist.

3. Brennstoffzellensystem nach Anspruch 2,
**dadurch gekennzeichnet, dass** durch das Gebläse (32, 42) Luft zur Brennstoffzelle (14) förderbar ist.

4. Brennstoffzellensystem nach Anspruch 1, 2 oder 3,
**dadurch gekennzeichnet, dass** in Strömungsrichtung (R) zwischen dem katalytischen Brenner (24) und dem brennstoffbetriebenen Brenner (26) eine erste Wärmetauscheranordnung (28) zur Übertragung von in dem katalytischen Brenner (24) erzeugter Wärme auf ein erstes Wärmeträgermedium vorgesehen ist und dass stromabwärts des brennstoffbetriebenen Brenners (26) eine zweite Wärmetauscheranordnung (30) zur Übertragung von in dem brennstoffbetriebenen Brenner (26) erzeugter Wärme auf ein zweites Wärmeträgermedium vorgesehen ist.

5. Brennstoffzellensystem nach einem der Ansprüche 1 bis 4,
**dadurch gekennzeichnet, dass** das Wärmeträgermedium oder/und die Verbrennungsprodukte des brennstoffbetriebenen Brenners (26) oder/und des katalytischen Brenners (24) dem Gaserzeugungssystem (12) oder/und der Brennstoffzelle (14) zur Erwärmung zuführbar sind.

6. Brennstoffzellensystem nach einem der Ansprüche 1 bis 5,
**dadurch gekennzeichnet, dass** dem Gaserzeugungssystem (12) ein weiterer brennstoffbetriebener Brenner (78) zugeordnet ist zur Erzeugung eines Stroms erwärmten Gases zur Einspeisung in eine Wärmetauscheranordnung (18) des Gaserzeugungssystems (12) oder/und zur Einspeisung in einen Reformer (16) des Gaserzeugungssystems (12).

7. Brennstoffzellensystem nach Anspruch 6,
**dadurch gekennzeichnet, dass** dem Strom erwärmten Gases Wasser beimischbar ist.

8. Brennstoffzellensystem nach einem der vorangehenden Ansprüche, umfassend eine Brenneranordnung mit:
- einernstromaufwärtigen ersten Zuführbereich (52) zur Zufuhr von Luft (L) vermittels eines Luftfördergebläses (32, 42) oder/und zur Zufuhr eines wasserstoffhaltigen Gasgemisches (W),
- einernersten Brennerbereich (54) mit einer Katalysatoranordnung (56) zur Umsetzung des wasserstoffhaltigen Gasgemisches (W) zur Wärmeerzeugung,
- stromabwärts des ersten Brennerbereichs (54), einem zweiten Brennerbereich (60) mit einem zweiten Zuführbereich (76) zur Zufuhr von Brennstoff zur Bildung eines zündfähigen Brennstoff/Luft-Gemisches zusammen mit in dem ersten Zuführbereich (52) zugeführter Luft (L),
- stromabwärts des zweiten Brennerbereichs (60), einer Wärmetauscheranordnung (28, 30) zur Übertragung von im ersten Brennerbereich (54) oder/und im zweiten Brennerbereich (60) erzeugter Wärme auf ein Wärmeträgermedium.

9. Brennstoffzellensystem nach Anspruch 8,
**dadurch gekennzeichnet, dass** zwischen dem ersten Brennerbereich (54) und dem zweiten Brennerbereich (60) oder/und dem zweiten Brennerbereich (60) und der Wärmetauscheranordnung (28, 30) eine Flammsperre (58, 62) angeordnet ist.

10. Brennstoffzellensystem nach Anspruch 8 oder 9,
**dadurch gekennzeichnet, dass** zwischen dem ersten Brennerbereich (54) und dem zweiten Brennerbereich (60) eine weitere Wärmetauscheranordnung (28) zur Übertragung von im ersten Brennerbereich (54) erzeugter Wärme auf ein Wärmeträgermedium vorgesehen ist.

11. Brennstoffzellensystem nach einem der Ansprüche 8 bis 10,
**dadurch gekennzeichnet, dass** der zweite Brennerbereich (60) eine Brennkammer (72) aufweist, in welcher die durch das Luftfördergebläse (32, 42) geförderte Luft und in einem Brennstoffverdampfer (64) erzeugter Brennstoffdampf unter Einsatz eines Zündorgans (74) zur Verbrennung bringbar sind.

12. Brennstoffzellensystem nach Anspruch 11,
**dadurch gekennzeichnet, dass** der Brennstoffverdampfer (64) ein flüssigen Brennstoff aufnehmendes poröses Verdampfermedium (68) und diesem zugeordnet eine Heizeinrichtung (78) zur Brennstoffdampferzeugung aufweist.

13. Brennerzellensystem nach Anspruch 11 oder 12,
**dadurch gekennzeichnet, dass** der Brennstoffverdampfer (64) ein in Richtung stromabwärts offenes Verdampfergehäuse (66) aufweist, in welches zu verdampfender Brennstoff einleitbar ist und welches von von dem Luftfördergebläse (32, 42) herangeförderter Luft zur Durchmischung derselben mit Brennstoffdampf stromabwärts des Verdampfergehäuses (66) umströmbar ist.

## Claims

1. Fuel cell system, comprising
- a gas production system (12) for producing a hydrogen containing gas mixture,
- a fuel cell (14) to which the hydrogen-containing gas mixture can be supplied for using the hydrogen contained therein for producing electricity, wherein a hydrogen-depleted gas mixture leaves the fuel cell (14),
- a catalytic burner (24) to which the hydrogen-depleted gas mixture can be supplied for producing heat,
- a heat exchanger arrangement (28, 30) for transferring heat produced in the catalytic burner (24) to a heat carrier medium,
- a fuel-operated burner (26) following the catalytic burner (24) for burning fuel and forming a flame,
- a heat exchanger arrangement (28,30) for transferring heat produced in the fuel-operated burner (26) to a heat carrier medium;
**characterized in that** the combustion products of the fuel-operated burner (26) or/and of the catalytic burner (24) may be supplied to the gas production system (12) as reaction material for producing the hydrogen-containing gas mixture.

2. Fuel cell system according to claim 1,
**characterized in that** the catalytic burner (24) has a fan (32, 42) by means of which air can be forwarded for reaction in the catalytic burner (24) or/and for reaction in the fuel operated burner (26).

3. Fuel cell system according to claim 2,
**characterized in that** air can be forwarded by the fan (32, 42) to the fuel cell (14).

4. Fuel cell system according to claim 1,2 or 3,
**characterized in that** a first heat exchanger arrangement (28) is provided in the flow direction (R) between the catalytic burner (24) and the fuel-operated burner (26), for transferring heat produced in the catalytic burner (24) to a first heat carrier medium; and that a second heat exchanger arrangement (30) is provided downstream of the fuel-operated burner (26), for transferring heat produced in the fuel-operated burner (26) to a second heat carrier medium.

5. Fuel cell system according to one of claims 1 to 4,
**characterized in that** the heat carrier medium or/and the combustion products of the fuel-operated burner (26) or/and of the catalytic burner (24) can be supplied to the gas production system (12) or/and to the fuel cell (14) for heating.

6. Fuel cell system according to one of claims 1 to 5,
**characterized in that** a further fuel-operated burner (78) is associated with the gas production system (12) for producing a flow of heated gas for insertion into a heat exchanger arrangement (18) of the gas production system (12) or/and for insertion into a reformer (16) of the gas production system (12).

7. Fuel cell system according to claim 6,
**characterized in that** water can be admixed to the stream of heated gas.

8. Fuel cell system according to one of the preceding claims, comprising:
a burner arrangement with:
- an upstream first supply region (52) for supplying air (L) by means of an air forwarding fan (32, 42) or/and for supplying a hydrogen-containing gas mixture (W),
- a first burner region (54) with a catalyst arrangement (56) for reaction of the hydrogen-containing gas mixture (W) for heat production,
- downstream of the first burner region (54), a second burner region (60) with a second supply region (76) for supplying fuel for forming an ignitable fuel air mixture together with the air (L) supplied in the first supply region (52),
- downstream of the second burner region (60), a heat exchanger arrangement (28, 30) for transferring heat produced in the first burner region (54) or/and in the second burner region (60) to a heat carrier medium.

9. Fuel cell system according to claim 8,
**characterized in that** a flame barrier (58,62) is arranged between the first burner
• region (54) and the second burner region (60) or/and the second burner region (60) and the heat exchanger arrangement (28, 30).

10. Fuel cell system according to claim 8 or 9,
**characterized in that** a further heat exchanger arrangement (28) is provided between the first burner region (54) and the second burner region (60) for transferring heat produced in the first burner region (54) to a heat carrier medium.

11. Fuel cell system according to one of claims 8 to 10,
**characterized in that** the second burner region (60) has a combustion chamber (72) in which the air forwarded by the air forwarding fan (32,42) and fuel vapor produced in a fuel evaporator (64) can be brought to combustion using an ignition member (74).

12. Fuel cell system according to claim 11,
**characterized in that** the fuel evaporator (64) has a porous evaporator medium (68) taking up liquid fuel and allocated to this a heating device (78) for producing fuel vapor.

13. Fuel cell system according to claim 11 or 12,
**characterized in that** the fuel evaporator (64) has an evaporator housing (66), open in the downstream direction, into which fuel to be evaporated can be introduced, and around which air, forwarded in by the air forwarding fan (32, 42), can flow for mixing with fuel vapor downstream of the evaporator housing (66).

## Revendications

1. Système de pile à combustible, comprenant
- un système de production de gaz (12) pour produire un mélange de gaz hydrogéné,
- une pile à combustible (14) à laquelle le mélange de gaz hydrogéné peut être conduit pour utiliser l'hydrogène y contenu pour la production d'électricité, un mélange de gaz pourvu d'hydrogène quittant la pile à combustible (14),
- un brûleur catalytique (24), auquel le mélange de gaz pourvu d'hydrogène peut être conduit pour produire de la chaleur
- un arrangement d'échangeur thermique (28, 30) pour transférer la chaleur produite dans le brûleur catalytique (24) à un médium de vecteur de chaleur;
- un brûleur à combustible (26) suivant le brûleur catalytique (24) pour brûler du combustible en générant une flamme,
- un arrangement d'échangeur thermique (28, 30) pour transférer la chaleur produite dans le brûleur à combustible (24) à un médium de vecteur de chaleur; **caractérisé par** les produits de combustion du brûleur à combustible (26) ou/et du brûleur catalytique (24) pouvant être conduits au système de production de gaz (12) en tant que matière de réaction pour produire le mélange de gaz hydrogéné.

2. Système de pile à combustible selon la revendication 1,
**caractérisé par** le brûleur catalytique (24) comprenant une soufflerie (32, 42) par laquelle de l'air peut être conduit au brûleur catalytique (24) ou/et au brûleur à combustible (26) pour y réagir.

3. Système de pile à combustible selon la revendication 2,
**caractérisé par** de l'air pouvant être conduit à la pile combustible (14) par la soufflerie (32, 42).

4. Système de pile à combustible selon la revendication 1, 2 ou 3,
**caractérisé par** un premier arrangement d'échangeur thermique (28) étant prévu dans la direction d'écoulement (R) entre le brûleur catalytique (24) et le brûleur à combustible (26) pour transférer la chaleur produite dans le brûleur catalytique (24) à ■ un premier médium de vecteur de chaleur et par un deuxième arrangement d'échangeur thermique (30) étant prévu en aval du brûleur à combustible (26) pour transférer la chaleur produite dans le brûleur à combustible (26) à un deuxième médium de vecteur de chaleur.

5. Système de pile à combustible selon une des revendications 1 à 4, **caractérisé par** le médium de vecteur de chaleur ou/et les produits de combustion du brûleur à combustible (26) ou/et du brûleur catalytique (24) pouvant être conduits au système de production de gaz (12) ou/et au pile à combustible (14) pour l'échauffement.

6. Système de pile à combustible selon une des revendications 1 à 5, **caractérisé par** un autre brûleur à combustible (78) étant associé au système de production de gaz (12) pour produire un courant de gaz échauffé pour l'insertion dans un arrangement d'échangeur thermique (18) du système de production de gaz (12) ou/et pour l'insertion dans un réformateur (16) du système de production de gaz (12).

7. Système de pile à combustible selon la revendication 6,
**caractérisé par le fait que** de l'eau peut être ajoutée au courant de gaz échauffé.

8. Système de pile à combustible selon une des revendications précédentes, comprenant un arrangement de brûleur avec:
- une première section d'alimentation (52) en amont pour ajouter de l'air (L) en utilisant une soufflerie d'air (32, 42) ou/et pour ajouter un mélange de gaz hydrogéné (W),
- une première section de brûleur (54) avec un arrangement de catalyseur (56) pour la réaction du mélange de gaz hydrogéné (W) pour la production de chaleur,
- en aval de la première section de brûleur (54) une deuxième section de brûleur (60) avec une deuxième section d'alimentation (76) pour ajouter du combustible pour former avec l'air (L) conduit dans la première section d'alimentation (52) un mélange combustible/air allumable,
- en aval de la deuxième section de brûleur (60) un arrangement d'échangeur thermique (28, 30) pour transférer la chaleur produite dans la première section de brûleur (54) ou/et dans la deuxième section de brûleur (60) à un médium de vecteur de chaleur.

9. Système de pile à combustible selon la revendication 8,
**caractérisé par** un barrage de flamme (58, 62) étant prévu entre la première section de brûleur (54) et la deuxième section de brûleur (60) ou/et la deuxième section de brûleur (60) et l'arrangement d'échangeur thermique (28, 30).

10. Système de pile à combustible selon la revendication 8 ou 9,
**caractérisé par** un autre arrangement d'échangeur thermique (28) étant prévu entre la première section de brûleur (54) et la deuxième section de brûleur (60) pour transférer de la chaleur produite dans la première section de brûleur (54) à un médium de vecteur de chaleur.

11. Système de pile à combustible selon une des revendications 8 à 10, **caractérisé par** la deuxième section de brûleur (60) comprenant une chambre de combustion (72), dans laquelle l'air avancé par la soufflerie d'air (32, 42) et la vapeur de combustible produite dans un évaporateur de combustible (64) peuvent être amenés à combustion en utilisant un élément d'allumage (74).

12. Système de pile à combustible selon la revendication 11,
**caractérisé par** l'évaporateur de combustible (64) comprenant un médium d'évaporation poreux (68) recevant du combustible liquide et associé à ce dernier un appareil de chauffage (78) pour générer de la vapeur de combustible.

13. Système de pile à combustible selon la revendication 11 ou 12,
**caractérisé par** l'évaporateur de combustible (64) comprenant un boîtier d'évaporateur ouvert en aval, dans lequel du combustible à évaporer peut être inséré et autour duquel peut circuler l'air avancé par la soufflerie d'air (32, 42) pour mélanger l'air et la vapeur de combustible en aval du boîtier d'évaporateur (66).
